# EUROPEAN PATENT APPLICATION

(11) **EP 1 473 327 A1**
(43) Date of publication of application: **03.11.2004**
(21) Application number: 03076391.6
(22) Date of filing: 01.05.2003
(51) Int. Cl.: C08L 95/00, C08K 5/20, C08L 25/00, C08L 25/08, C08L 25/16, C08L 25/18

(54) **A colorable composition**

(71) Applicant: KRATON Polymers Research B.V., 1031 CM Amsterdam (NL)
(72) Inventor: Trommelen, Erik A. T., 1031 CM Amsterdam (NL); Damen, Jaques W. M., 1031 CM Amsterdam (NL)
(74) Representative: Kortekaas, Marcel C. J. A.

(57) **Abstract**

The present invention concerns a colorable composition comprising
a bitumen-like compound having a PEN value of at least 30 dmm, and comprising at least a hydrogenated petroleum resin (a) or comprising at least a hydrogenated petroleum resin (a) and an oil (b) and
a mixture of thermoplastic elastomers comprising:
   a block copolymer (c) of formula A-B-A or (A-B)ₙ-X, wherein A stands for a polymer block of a vinylaromatic monomer, B stands for a polymer block of a conjugated diene monomer, X stands for a coupling moiety, and n stands for an integer of 2 to 20, and
   a block copolymer (d) of formula A-C-A or (A-C)ₙ-X, wherein A, X, and n have the previously given meanings and C stands for a polymer block of a conjugated diene monomer, hydrogenated to an extent of at least 50% wherein the weight ratio of (c) to (d) varies from 95:5 to 5:95, the total amount of A in block copolymers (c) and (d) is in the range of from 10 to 45 weight% and
wherein the block copolymers have an apparent molecular weight of from 100,000 to 600,000, and the content of said mixture of (c) and (d) being in the range from 5 to 35 wt.% based on the composition, and its use as roofing membrane/roofing felt, as well as colored roofing membranes/roofing felts made therefrom.

## Description

### Field of the Invention

The present invention concerns a colorable composition and its use as roofing membrane/roofing felt, as well as colored roofing membranes/roofing felts made therefrom.

### Background to the Invention

The market for single ply polymeric roofing felts is growing. Part of the success is for aesthetical reasons (bright colours) and therefore a roofing felt based on the proven bituminous technology with the look of single ply would be highly desirable. Colored roofing felts are a fashion. Such felts or membranes need to meet certain building construction requirements. For instance, they need to provide protection from rain and such like, and have an excellent weatherability. Moreover, such felts should ideally be easy to apply.

From EP179510A there is known a colorable composition for use as binder in asphalt pavings. This reference describes the formulation procedure for synthetic bitumen with the required ingredients to produce a coloured binder. Synthetic bitumen is necessary as the 'black'-asphaltenes present in 'normal' bitumen strongly hamper coloration. It has been found however that such a composition does not provide lasting color stability: when applied to a roof as roofing felt, the surface discolors due to the migration/exudation of low molecular weight components of the composition.

From JP2002-206047A there is known a colorable binder composition, principally for paving purposes. Such compositions exhibit excellent weather resistance even when actually used outdoors. On the other hand, such a composition does not exhibit the properties required in a roofing felt. In particular low temperature flexibility as well as high temperature resistance is missing.

It is an object of the present invention to provide a colorable composition combining color stability and these low temperature/high temperature properties.

### Summary of the Invention

Accordingly, there is provided a colorable composition comprising
a bitumen-like compound having a PEN value of at least 30 dmm, and comprising at least a hydrogenated petroleum resin (a) or comprising at least a hydrogenated petroleum resin (a) and an oil (b) and
a mixture of thermoplastic elastomers comprising:
a block copolymer (c) of formula A-B-A or (A-B)ₙ-X, wherein A stands for a polymer block of a vinylaromatic monomer, B stands for a polymer block of a conjugated diene monomer, X stands for a coupling moiety, and n stands for an integer of 2 to 20, and
a block copolymer (d) of formula A-C-A or (A-C)ₙ-X, wherein A, X, and n have the previously given meanings and C stands for a polymer block of a conjugated diene monomer, hydrogenated to an extent of at least 50% wherein the weight ratio of (c) to (d) varies from 95:5 to 5:95, the total amount of A in block copolymers (c) and (d) is in the range of from 10 to 45 weight% and
wherein the block copolymers have an apparent molecular weight of from 100,000 to 600,000, and the content of said mixture of (c) and (d) being in the range from 5 to 35 wt.% based on the composition.

The invention also provides the use of the colorable composition for making a roofing membrane or roofing felt as well as the colored roofing membrane or roofing felt made of said composition.

### Detailed description of the Invention

Styrenic block copolymers and hydrogenated block copolymers are known in the art. Such copolymers are available as triblock copolymers (made sequentially or by coupling a diblock copolymer), as tetrablock copolymers or multiblock copolymers) as linear copolymers and also as branched or radial copolymers (using a multifunctional coupling agent and/or a multifunctional copolymer during its preparation). Such copolymers are typically based on styrene and either butadiene or isoprene or a mixture thereof. However, similar copolymers are obtained using substituted styrenes as monovinyl arenes and/or using C5 to C8 conjugated dienes. Styrenic block copolymers are, for instance available as KRATON® D polymers. Hydrogenation of such block copolymers is also conventional. Such polymers are commercially available as, for instance, KRATON® G polymers.

Typical styrenic block copolymers include SBS (styrene-butadiene-styrene) and SIS (styrene isoprene-styrene), whereas typical hydrogenated styrenic block copolymers include SEBS (styrene-ethylene-butylene-styrene block copolymer) and SEPS (styrene-ethylene-propylene-styrene block copolymers). Those which have a molecular weight of at least 50,000, preferably from 100,000-600,000, a melt index (200°C, 5 kg) of not more than 10 g/10 minutes, a polystyrene content of from 10 to 50% and a specific gravity of at least 0.9 are preferred.

It will be appreciated that block copolymers, prepared by means of coupling of living diblock copolymers by means of a coupling agent and termination of remaining living block copolymers, will finally contain small amounts (e.g., less than 20 mole%) of diblock copolymer.

The apparent molecular weights of the complete block copolymers and each of the intermediate precursors have been determined by Gel Permeation Chromatography, and expressed in terms of standard poly(styrene), by using the method described e.g. by J.R. Runyon et al in J. Polym. Sci., 13, 2359 (1969).

The bitumen-like compound should have a PEN value of at least 30 dmm. Suitable bitumen-like compounds are disclosed in JP2002-206047A, the contents of which are included herein by reference. Of particular relevance are compositions comprising the hydrogenated petroleum resin
(a) and an oil (b) with a flash point of 230°C or above and a paraffinic content of at least 50% and a viscosity of at least 7 mm²/s (100°C). Preferably, the bitumen-like compound comprises less than 40 wt.% of the oil.

Hydrogenated resins are known in the art and include for instance the resins described in EP0802251A. Hydrogenation of such resins to a degree of at least 70% based on the initial unsaturation is preferred.

As far as the oil is concerned, again the oils disclosed in JP2002-206047A may be used, including both mineral oils and naphthenic oils.

The colorable composition may comprise further components such as pigments and fillers. The colorable composition may also comprise one or more engineering plastics, e.g., selected from atactic polypropylene, and EPDM and the like. For roofing purposes, however, the colorable composition should have a softening point of from 70 to 180°C

### Examples

The invention is described below by means of examples and comparative examples, but the invention is not limited by these examples and comparative examples.

The examples and comparative examples were prepared in accordance with the combinations indicated in the tables below. The amounts compounded are all indicted in units of wt%. Moreover, the colorable binder compositions for roofing purposes were produced using a homogenizer at a mixing temperature of 180°C, a homogenizer rotation rate of 3,000 rpm with a mixing time of 1 hour. The finished colorable binder compositions for roofing purposes were subjected to needle penetration and softening point measurements using the methods of ASTM D5 and ASTM D36, respectively.

The binder was formed into a sheet measuring 10 cm x 10 cm x 3 mm for high temperature flow testing and a sheet measuring 5 cm x 20 cm x 3 mm for low temperature flexibility testing. Accelerated ageing tests were carried out on the sheets in an air ventilated oven at 80°C.

### Experiment 1

A colourable composition was prepared based on 4.4% SEBS (having a molecular weight of about 190,000), 2.2% SBS (having a molecular weight of about 380,000), 12.1% mineral oil (having a flash point of about 250°C and a parrafinic content of about 70%), 36.3% of a (90%) hydrogenated petroleum resin. This material had a R&B of 126°C, a PEN at 25°C of 92 dmm, a PEN at 50°C of 118 dmm, a DIN flow, pass at 100°C and a cold bend pass at -10°C.

To this composition 35% of limestone (filler) and 10% pigment (titaniumoxide and chromiumoxide green) were added. The colored composition had a R&B of 132°C, a PEN at 25°C of 42 dmm, a PEN at 50°C of 69 dmm, a DIN flow, pass at 110°C and a cold bend pass at -10°C.

The R&B changed from 119 to 120 (2 weeks), 120 (1 month) to 117°C (2 months) upon aging. Likewise PEN remained nearly the same (82; 84; 86; 96 dmm).

Importantly, the color stability was monitored over the 2 month period. The results show that no difference in color is observed before and after aging. These results demonstrate the color stability of the colored compound, as well as the suitability therefore for roofing purposes.

## Claims

1. A colorable composition comprising
a bitumen-like compound having a PEN value of at least 30 dmm, and comprising at least a hydrogenated petroleum resin (a) or comprising at least a hydrogenated petroleum resin (a) and an oil (b) and
a mixture of thermoplastic elastomers comprising:
a block copolymer (c) of formula A-B-A or (A-B)ₙ-X, wherein A stands for a polymer block of a vinylaromatic monomer, B stands for a polymer block of a conjugated diene monomer, X stands for a coupling moiety, and n stands for an integer of 2 to 20, and
a block copolymer (d) of formula A-C-A or (A-C)ₙ-X, wherein A, X, and n have the previously given meanings and C stands for a polymer block of a conjugated diene monomer, hydrogenated to an extent of at least 50% wherein the weight ratio of (c) to (d) varies from 95:5 to 5:95, the total amount of A in block copolymers (c) and (d) is in the range of from 10 to 45 weight% and
wherein the block copolymers have an apparent molecular weight of from 100,000 to 600,000, and the content of said mixture of (c) and (d) being in the range from 5 to 35 wt.% based on the composition.

2. The composition of claim 1 wherein the bitumen-like compound comprises the hydrogenated petroleum resin (a) and an oil (b) with a flash point of 230°C or above and a paraffinic content of at least 50% and a viscosity of at least 7 mm²/s (100°C).

3. The composition of claim 1 or 2 wherein the bitumen-like compound comprises less than 40 wt.% of the oil.

4. The composition of any one of claims 1 to 3 comprising a bitumen-like compound comprising
from 4 to 12 wt% of the hydrogenated petroleum resin (a) ;
from 2 to 10 wt.% of the oil (b) and
a mixture of thermoplastic elastomers comprising:
from 15 to 35 wt.% of the block copolymer (c) and
from 55 to 75 wt.% of the block copolymer (d).

5. The composition of any one of claims 1-4 wherein c) is at least one of a styrene-isoprene-styrene block copolymer and a styrene-butadiene-styrene block copolymer.

6. The composition of any one of claims 1-5 wherein d) is at least one of a styrene-ethylene-butylene-styrene block copolymer and a styrene-ethylene-propylene-styrene block copolymer.

7. The colorable composition of any one of claims 1-6 further comprising at least one of pigments and fillers.

8. The colorable composition of any one of claims 1-7 further comprising one or more engineering plastics.

9. The colorable composition of any one of claims 1-8 having a softening point of from 70 to 180°C.

10. Use of the colorable composition of any one of claims 1-9 for making a roofing membrane or roofing felt.

11. A roofing felt comprising the colorable composition of any one of claims 1-10.
